# EUROPÄISCHE PATENTSCHRIFT

(11) **EP 2 336 618 B1**
(45) Veröffentlichungstag und Bekanntmachung des Hinweises auf die Patenterteilung: **17.10.2018**
(21) Anmeldenummer: 10015615.7
(22) Anmeldetag: 14.12.2010
(51) Int. Cl.: F16K 31/06, F16K 31/08

(54) **Magnetantrieb**
Magnetic actuator
Actionneur magnétique

(30) Priorität: 15.12.2009 DE 102009058165
(43) Veröffentlichungstag der Anmeldung: 22.06.2011
(73) Patentinhaber: Firma SVM Schultz Verwaltungs-GmbH & Co. KG, 87700 Memmingen (DE)
(72) Erfinder: Weiss, Johann, D-88239 Wangen (DE)
(74) Vertreter: Schulz, Manfred

(56) Entgegenhaltungen:
- EP-A2- 0 959 279
- DE-A1-102006 035 568
- DE-U1- 20 100 471
- GB-A- 1 348 671
- US-A- 4 574 841
- US-A1- 2005 189 021

## Beschreibung

Die Erfindung betrifft einen Magnetantrieb, bestehend aus einem magnetisierbaren Körper und einem, zumindest teilweise, magnetischen Klappanker, wobei der Klappanker am Körper in Abhängigkeit des Magnetisierungsgrades des magnetisierten Körpers mindestens zwei verschiedene Stellungen einzunehmen vermag, wozu der Klappanker über eine Klappachse klappt.

Des Weiteren umfasst die Erfindung auch ein Magnetventil, welches einen Magnetantrieb, wie beschrieben, umfasst.

Vorgenannte Magnetantriebe beziehungsweise Magnetventile sind im Stand der Technik bekannt. So beschreibt die deutsche Offenlegungsschrift 44 05 657 ein spezielles Magnetventil, bei welchem der Klappanker mit zwei zueinander beabstandeten Stößeln ausgestattet ist, die in geeigneter Weise mit Durchlassöffnungen des Ventiles zusammenwirken. Je nach Stellung des Klappankers wird dabei zum Beispiel die eine Durchlassöffnung freigegeben und die andere verschlossen und umgekehrt. Zum Beispiel ist die Anordnung so gewählt, dass in einer ersten Stellung der Druckanschluss abgesperrt ist und der Arbeitsanschluss über den Entlüftungsanschluss entlüftet wird, wozu der Lüftungsanschluss geöffnet ist. In der zweiten Stellung wird der Druckanschluss geöffnet und gleichzeitig der Entlüftungsanschluss geschlossen, wodurch das zu steuernde Medium am Druckanschluss in das Ventil einströmt und am Arbeitsanschluss das Ventil wieder verlässt. Die jeweilige Durchlassöffnung ist dabei mit dem Arbeitsanschluss beziehungsweise dem Entlüftungsanschluss verbunden. Die vorgenannten Magnetantriebe besitzen dabei einen magnetisierbaren Körper, zum Beispiel einen Elektromagneten, der bei Bedarf entsprechend magnetisiert wird. Bei einem Elektromagneten wird dabei der elektrische Strom durch die Wicklungen der Spule geleitet, wodurch das Magnetfeld entsteht. Dadurch wird der magnetische Klappanker angezogen und die Schaltbewegung ausgeführt. So besitzt der Magnetisierungsgrad in der Regel zwei verschiedene Werte, zum Beispiel "keine Magnetisierung" und "eine Magnetisierung" (wenn zum Beispiel der Strom durch die Spule des Elektromagneten eingeschaltet ist.

Gattungsgemäße Magnetventile eignen sich zum Beispiel für das Regeln und/oder Steuern von fließfähigen Medien wie beispielsweise von Gasen oder auch Flüssigkeiten, der Anwendungsbereich umfasst daher vor allem pneumatische oder hydraulische Aufgabenstellungen.

Der Anwendungsbereich eines Magnetventiles ist für den gattungsgemäßen Magnetantrieb nur ein Anwendungsfall, die Erfindung beansprucht daher auch Schutz für einen Magnetantrieb in beliebiger Anwendung.

Auch die Druckschriften EP 0 959 279 A2, DE 10 2006 035568 A1, US 2005/189021 A1 und GB 1 348 671 A betreffen Magnetantriebe mit magnetischen Ankerkörpern, die jedoch erhebliche Nachteile hinsichtlich der Abdichtleistung und Lebensdauer der Dichtelemente aufweisen und sich zudem wesentlich aufwändiger in der Konstruktion erweisen.

Das Bewegungskonzept stellt auf die anziehende Wirkung von Magneten beziehungsweise Elektromagneten ab. Im Stand der Technik ist zum Beispiel ein magnetisierbarer Klappanker vorgesehen, der balkenartig ausgebildet ist und um eine Klappachse klappt, also schwenkt. Die Magnetisierbarkeit des Klappankers wird durch einen entsprechenden Werkstoff, zum Beispiel einen Sinterwerkstoff wie Sintermetall (MIM) oder einem sonstigen metallischen beziehungsweise magnetisierbaren Werkstoff hergestellt, der eine entsprechende Magnetisierung beziehungsweise Magnetisierbarkeit und Masse aufweist.

Dabei ist die gesamte Masse des Klappankers während der Schaltbewegung (von der ersten zur zweiten Stellung) zu bewegen, was entsprechende Kräften erfordert, wenn eine gewünschte Schaltgeschwindigkeit erreicht werden soll.

Der magnetische Klappanker wird durch einen bei Bedarf magnetisierbaren Körper bewegt. Als magnetisierbarer Körper ist beispielsweise ein Elektromagnet vorgesehen. Es ist grundsätzlich möglich mit erhöhtem Aufwand, zum Beispiel mit einer größeren Spule beziehungsweise mit einer größeren Anzahl von Wicklungen auf der Spule, die anziehende Wirkung des Elektromagneten und damit die beschleunigende Kraft an dem Klappanker zu erhöhen, allerdings geht dies auch mit einem entsprechend höheren Aufwand (und daher Kosten) und mit höherem Gewicht sowie Bauvolumen einher.

Das Dokument US 4,574,841 zeigt ein Magnetventil mit Kipphebel, welcher durch zwei Verschlussstücke und einen verbindenden Metallstreifen gebildet ist.

Es ist daher Aufgabe der Erfindung, zumindest einen der vorgenannten Nachteile zu vermeiden, insbesondere einen Magnetantrieb zur Verfügung zu stellen, der schneller schaltet.

Gelöst wird diese Aufgabe durch einen Magnetantrieb, wie eingangs beschrieben, wobei vorgeschlagen wird, dass der Klappanker von einem Ankerträger gebildet ist, der ein magnetisches Ankerteil trägt, welches mit dem magnetischen Körper zusammenwirkt. Die Erfindung schlägt einen prinzipiell zweiteiligen Klappanker vor, der gebildet ist von einem Ankerträger, der den magnetischen Ankerteil aufnimmt. Diese Lösung führt zu einer überraschend großen Anzahl von Vorteilen.

Der erfindungsgemäße Vorschlag erlaubt es zunächst den Klappanker deutlich leichter bei gleichen magnetischen Eigenschaften zu realisieren, was, aufgrund der geringeren zu beschleunigenden Masse bei gleichen von dem magnetisierbaren Körper erzeugten, anziehenden Kräften, zu höherer Beschleunigung und daher zu geringeren Schaltzeiten führt. Des Weiteren erlaubt der erfindungsgemäße Vorschlag, das verhältnismäßig teure magnetische Material des Klappankers effektiv einzusetzen. Es wird nämlich nur in dem Bereich ein magnetisches Ankerteil an dem Klappanker nach der Erfindung angeordnet, wo dieses im Zusammenwirken mit dem magnetisierbaren Körper optimal positioniert und höchst effizient ist. Insbesondere wird ein entsprechendes magnetisches Ankerteil zum Schließen des magnetischen Flusses mitverwendet. Dadurch bestimmt sich aber eine ausreichende Größe des magnetischen Ankerteils und daher eine entsprechende geringere Masse des magnetischen Materials des Klappankers. Der verhältnismäßig teurere Werkstoff kann eingespart werden.

Der erfindungsgemäße Vorschlag eröffnet auch die Möglichkeit, den magnetisierbaren Körper, zum Beispiel einen elektromagnetischen Antrieb (eine Spule) kleiner zu dimensionieren, um gleiche oder sogar noch bessere Schalteigenschaften des Klappankers zu erreichen. Dies geht einher mit geringerem Aufwand bei der Realisierung des magnetisierbaren Körpers und einer geringeren Energieaufnahme beim Schaltvorgang. Zudem kann das Aufbaumaß reduziert werden.

In einer bevorzugten Ausgestaltung der Erfindung ist der Ankerträger aus einem anderen Material ausgebildet als der magnetische Ankerteil. Der erfindungsgemäße Effekt (z.B. Reduktion der Herstellkosten) wird aber auch mit einer Anordnung erreicht, bei welcher Ankerträger und Ankerteil aus grundsätzlich dem gleichen Material bestehen, der Ankerteil aber zusätzlich eine magnetische Aktivierung besitzt. Dabei kann die magnetische Aktivierung eben nur auf den Ankerteil beschränkt werden. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Ein weiterer Vorteil der Erfindung liegt auch darin, dass die magnetische Eigenschaft des Ankerteiles räumlich genau so zu positionieren ist, wie der magnetisierbare Körper im Magnetantrieb wirksam wird. Üblicherweise ist der Klappanker insgesamt größer als das magnetische Ankerteil und auch durch die Konzentration der magnetischen Eigenschaft des Klappankers auf den magnetischen Ankerteil werden Steuerverluste und daraus resultierende mechanische Einschränkungen durch den erfindungsgemäßen Vorschlag wirksam vermieden. Demzufolge bildet auch die zuvor beschriebene Ausführungsform den Gegenstand des Hauptanspruchs sowie der vorhergehenden Unteransprüche weiter und dient der Lösung der eingangs gestellten Aufgabe in gleicher Weise.

In einer bevorzugten Ausgestaltung der Erfindung ist vorgesehen, dass der Ankerträger aus einem Leichtwerkstoff, einem Metall, einem Leichtmetall, zum Beispiel Aluminium oder auch aus einem Kunststoff besteht. Neben homogenen Kunststoffen umfasst die Erfindung aber auch faserverstärkte Kunststoffe, die zur Bildung des Ankerträgers eingesetzt werden, wobei hierbei zum Beispiels Kohlefasern oder Glasfasern Verwendung finden können. Die erfindungsgemäße Wirkung einer Gewichtseinsparung am Ankerträger wird zum Beispiels auch schon bei einem aus einem flächigen Metallstück gebildeten Ankerträger realisiert, der zum Beispiel als Stanzteil oder Stanzbiegeteil aus einem flächigen (Blech-) Metallstück hergestellt ist. Ausreichende Festigkeit für die Anwendung des Magnetantriebes wird hierbei kombiniert mit geringem Gewicht und geringen Herstellungskosten bei trotzdem ausreichenden magnetischen Eigenschaften, die auch von der Auswahl und Dimensionierung des Ankerteils abhängen. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Üblicherweise ist der Ankerträger, gemäß der Erfindung, balkenförmig ausgestaltet und erstreckt sich, von der räumlichen Ausgestaltung her, über den magnetisierbaren Körper, um zum Beispiel in seinem Randbereich entsprechende Steuerelemente, wie einen oder mehrere Dichtnippel oder einen oder mehrere Stößel, aufzunehmen.

Geschickterweise ist das magnetische Ankerteil als Permanentmagnet ausgebildet, ohne aber hierauf die Erfindung beschränken zu wollen. Das Ankerteil ist dabei zum Beispiel aus Sinterwerkstoffen, wie Sintermetall (MIM) oder sonstigen metallischen Werkstoffen gebildet.

In einer bevorzugten Ausgestaltung der Erfindung ist der Ankerträger nicht als Profilabschnitt ausgebildet, sondern der Ankerträger ist zumindest einseitig mit einer stumpfen Abwinklung ausgestattet, um eine Wippkante zu bilden. Dabei wird erfindungsgemäß vorgesehen, dass die dem magnetisierbaren Körper zugewandte und/oder davon abgewandte Begrenzungsfläche des Ankerträgers aus zumindest zwei an einer Wippkante stumpf aneinanderstoßenden Teilflächen gebildet ist. Gemäß dem erfindungsgemäßen Vorschlag können dabei auch beide Begrenzungsflächen mit je stumpf aneinanderstoßenden Teilflächen realisiert sein. Die sich dabei bildenden konvex oder konkav ausgebildete(n) Wippkante(n) dient/dienen dann gegebenenfalls auch als Lagerung oder Abstützbereich gerade bei der Wipp- oder Klappbewegung des Klappankers.

Für Montagezwecke wird der Klappanker auf den magnetisierbaren Körper aufgelegt und gegebenenfalls durch eine Aktivierung des magnetisierbaren Körpers (zum Beispiel Einschalten des Stromflusses durch die Magnetspule) gehalten. Der Klappanker ist aber in einem Antriebsgehäuse ausreichend beweglich gelagert, insbesondere ist ein Deckelteil vorgesehen, welches den Klappanker aufnimmt und welcher auf der dem Körper abgewandten Seite angeordnet ist. In dem Deckelteil sind ein oder mehrere Abstütznoppen oder -rippen für den Klappanker vorgesehen, die gegebenenfalls auch mit der Wippkante des Ankerträgers zusammenwirken oder aber in dessen Umgebung an der jeweiligen Teilfläche angeordnet ist/sind. Das Deckelteil ist dabei auf der dem Körper abgewandten Seite angeordnet und daher ist/sind auch ein oder mehrere Abstütznoppen oder -rippen auf der dem Körper abgewandten Seite angeordnet und wirken mit dem Klappanker zusammen.

Die Anordnung ist dabei so gewählt, dass der Klappanker eine gewisse Beweglichkeit beziehungsweise Spiel behält, um die Klappbewegung also eine Verschwenkbewegung, um die Wippkante beziehungsweise um die Abstütznoppen oder -rippen ausführen zu können. Die Wippachse ist, wie auch bevorzugterweise die Wippkante, im wesentlichen rechtwinklig zur Längserstreckung des balkenförmigen Ankerträgers orientiert.

In einer bevorzugten Variante der Erfindung ist vorgesehen, dass der Klappanker mindestens eine Ausnehmung, Durchdringungsöffnung oder Führungsnut aufweist und an dem Deckelteil und/oder dem, insbesondere dem magnetischen Körper aufnehmenden, Gehäuseteil eine in die Ausnehmung, Durchdringungsöffnung oder die Führungsnut einstehender oder eingreifender Führungsstift oder Führungssteg vorgesehen ist. Mit Hilfe dieser erfindungsgemäßen Variante wird der Klappanker, insbesondere entweder der Ankerträger oder auch alternativ der magnetische Ankerteil, mit einer Ausnehmung (zum Beispiel sacklochartig) oder mit einer Führungsnut, die auch als Durchdringungsöffnung ausgebildet sein kann, ausgestattet, um den Klappanker hier an einem Führungssteg oder -stift aufzufädeln. Die Lagerung des Klappankers an dem Führungssteg, der auch stiftartig ausgebildet sein kann und dann mit einer entsprechenden Durchdringungsöffnung zusammenwirkt, erfolgt dabei mit ausreichendem Spiel, damit der Klappanker eine gewünschte Klapp- oder Wippbewegung ausführen kann. Er stützt sich dann zum Beispiel auf dem Stegende ab oder aber die Führungsnut weist eine entsprechende Weite auf, die deutlich größer ist, als die Breite des Führungssteges, damit ein entsprechendes Bewegungsspiel beziehungsweise Klappspiel verbleibt. Die Anordnung ist dabei alternativ so realisierbar, dass der Führungssteg entweder am Deckelteil oder an dem den magnetischen Körper aufnehmenden Gehäuseteil angeordnet ist. Natürlich ist es auch möglich den Führungssteg im Bereich des magnetischen Körpers anzuordnen, was ebenfalls von der Erfindung umfasst ist. Es ist auch möglich, sowohl am Deckelteil als auch am Gehäuseteil je einen Teilsteg des Führungssteges anzuordnen, woraus resultiert, dass der Führungssteg auf zwei Teilstege verteilt ist. In dieser Variante teilt sich der Führungssteg auf in zwei Teilführungsstege, die an dem Gehäuseteil beziehungsweise dem Deckelteil angeordnet sind. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

In einer bevorzugten Ausgestaltung der Erfindung ist der magnetische Körper gebildet von einer Spule, welche Drahtwicklungen trägt, die von elektrischem Strom durchflossen werden können. Alternativ hierzu ist es möglich, dass der magnetische Körper von einem bewegbaren Permanentmagneten gebildet ist. Die Anordnung ist dabei so gewählt, dass in geeigneter Weise der magnetische Körper aktivierbar ist, um so auf den magnetischen Ankerteil zu wirken und die gewünschte Schaltbewegung des Magnetantriebes zu realisieren. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Bevorzugterweise wird der magnetisierbare Körper nicht nur von einer Spule gebildet, sondern von einem Spulenpaar, die auf einem bevorzugt rechtwinklig ausgeformten U-förmigen Joch aufgesetzt sind. In einer bevorzugten Ausgestaltung ist dabei insbesondere eine Klappspule vorgesehen, die aus zwei Spulenbereichen besteht, die beim Wickeln der Spule aufgeklappt angeordnet sind, also derart, dass sich ein sich längs erstreckender, zweigeteilter Spulenkörper ergibt, der nach Abschluss der Aufwicklung zusammengeklappt also auch umgefaltet werden kann und zwei hernach parallel angeordnete, gegebenenfalls auch symmetrische Spulen besitzt, die auf die Schenkel es U-förmigen Joches aufschiebbar sind. Hierbei sind die beiden Spulenbereich durch ein Scharnier, beispielsweise ein Filmscharnier miteinander verbunden, um eine entsprechende Fixierung aber auch Beweglichkeit zur Verfügung zu stellen. Auch die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Wie bereits ausgeführt, umfasst die Erfindung nicht nur einen Magnetantrieb, sondern bezieht sich auch auf ein Magnetventil, welches mit einem entsprechenden, erfindungsgemäßen Magnetantrieb ausgestattet ist, wobei vorgesehen ist, dass in einem Ventilgehäuse, welche zumindest eine zu öffnende beziehungsweise zu verschließende Durchlassöffnung aufweist, der Klappanker zumindest einen Stößel trägt, der mit der Durchlassöffnung zusammenwirkt. Insbesondere in Anwendungsbereichen eines Magnetventiles kommt es auf effizientes und schnelles Schalten der Durchlassöffnungen an, wobei mit den erfindungsgemäßen Magnetventilen beliebige Medien (gasförmig oder auch flüssig) gesteuert beziehungsweise geregelt werden können.

Das erfindungsgemäße Magnetventil umfasst zumindest einen Stößel, der gegebenenfalls auch nippelartig wirkt. Wie insbesondere in der Zeichnung ausgeführt wird, wird in einer speziellen Anwendung der Klappanker mit je einem Stößel beziehungsweise Nippel im Endbereich des balkenartigen Klappankers ausgestattet, um dort mit einer Durchlassöffnung zusammenzuwirken. Die Anordnung ist dabei so gewählt, dass entsprechend der Stellung des Klappankers der Stößel beziehungsweise der Nippel die jeweilige Durchgangsöffnung verschließt oder freigibt.

In diesem Zusammenhang wird insbesondere darauf hingewiesen, dass alle im Bezug auf den Magnetantrieb beschriebenen Merkmale und Eigenschaften aber auch Verfahrensweisen sinngemäß auch bezüglich der Formulierung des erfindungsgemäßen Magnetventiles übertragbar und im Sinne der Erfindung einsetzbar und als mitoffenbart gelten. Gleiches gilt auch in umgekehrter Richtung, das bedeutet, nur im Bezug auf das Magnetventil genannte bauliche, also vorrichtungsgemäße Merkmale können auch im Rahmen der Ansprüche für den Magnetantrieb berücksichtigt und beansprucht werden und zählen ebenfalls zur Erfindung und zur Offenbarung.

In einer bevorzugten Ausgestaltung des erfindungsgemäßen Magnetventils ist vorgesehen, dass das dem Klappanker zugewandte Gehäuseteil des Ventilgehäuses als Deckelteil des Antriebsgehäuses dient. Geschickterweise sind dabei im Ventilgehäuse auch eine oder mehrere Durchlassöffnungen angeordnet, die von dem Nippel beziehungsweise Stößel, der oder die an dem Klappanker angeordnet ist/sind, gesteuert werden. Dabei besitzt diese Variante geschickterweise eine Doppelfunktion, da sie zum Einen Aufgaben des Ventiles beziehungsweise Ventilgehäuses übernimmt und, insbesondere die Durchlassöffnungen zur Verfügung stellt und zum Anderen als Deckelteil des Antriebsgehäuses, zum Beispiel für eine Lagerung des Klappankers, wie beschrieben, vorgesehen ist. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

Erfindungsgemäß ist dabei vorgesehen, dass das Antriebsgehäuse ein- oder auch mehrteilig ausgebildet ist. Auch der zum Antriebsgehäuse gehörende Deckelteil kann dabei in sich wieder ein- oder mehrteilig ausgebildet sein.

Der erfindungsgemäße Einsatz eines Magnetantriebes ist in einem Magnetventil derart, dass zum Beispiel der Klappanker entsprechend seiner Stellung mit seinem als Nippel wirkenden Stößel auf eine Durchlassöffnung gerichtet ist und diese öffnet oder verschließt, gegebenenfalls auch nur einen Teil öffnet, also regelt und steuert. Bei einer solchen Ausgestaltung ist der Klappanker im vom Medium durchströmten Ventilraum angeordnet, der im Übrigen entsprechend dicht ausgebildet ist.

In einer alternativen Ausgestaltung ist vorgesehen, dass der Klappanker durch eine Membran von dem Ventilraum abgegrenzt ist und der Stößel über ein Membranteil oder einen Membranbereich auf die Durchlassöffnung wirkt. Dabei ist vorteilhafterweise gegebenenfalls der Stößel zumindest kraftschlüssig mit dem Membranteil verbunden, um die Öffnungs- beziehungsweise Schließbewegung zuverlässig auszuführen. Der kraftschlüssige Verbund kann zum Beispiel durch eine formschlüssige oder auch stoffschlüssige Verbindung (z.B. Kleben, Verschweißen, einstückige Herstellung und so weiter) realisiert sein. Die zuvor beschriebene Ausführungsform bildet den Gegenstand des Hauptanspruchs sowie der vorhergehenden Unteransprüche weiter und dient der Lösung der eingangs gestellten Aufgabe in gleicher Weise.

In der Zeichnung ist die Erfindung insbesondere in verschiedenen Ausführungsbeispielen schematisch dargestellt. Es zeigen:
Fig. 1a, 1b, 2a, 2b und 3a ein erfindungsgemäßes Magnetventil unter Verwendung eines erfindungsgemäßen Magnetantriebes jeweils in einer Schnittdarstellung in verschiedenen Stellungen (Fig. 1a, 2a in einer ersten Stellung beziehungsweise Fig. 1b, 2b in einer zweiten Stellung);
Fig. 2c und 2d Details verschiedener Ausführungsformen der Abstützung für den Klappanker und
Fig. 3b bis 3d Details verschiedener Ausführungsformen eines im erfindungsgemäßen Magnetventils verwendbaren Klappankers, jeweils in perspektivischer Darstellung.

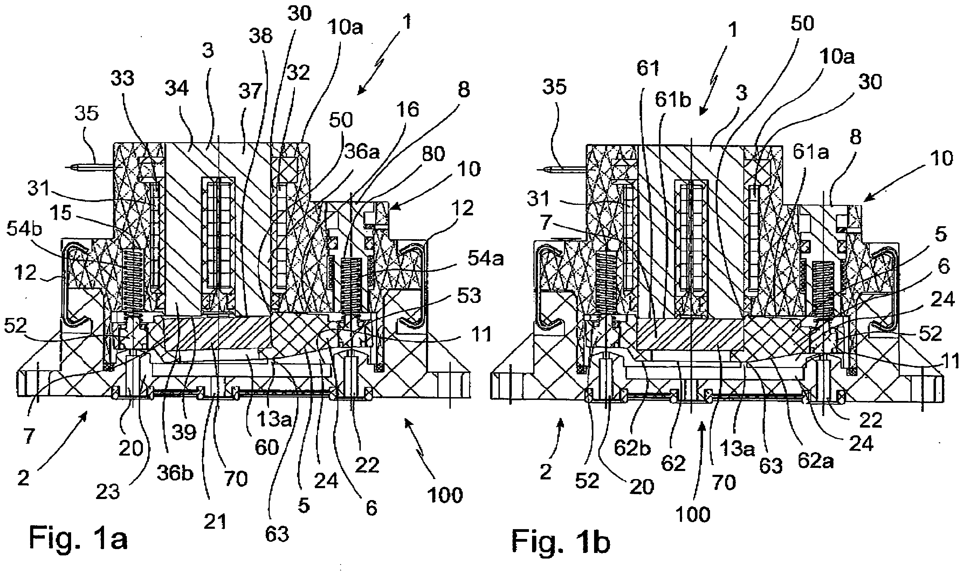

In den Figuren sind gleiche oder einander entsprechende Elemente jeweils mit den gleichen Bezugszeichen bezeichnet und werden daher, sofern nicht zweckmäßig, nicht erneut beschrieben. Das erfindungsgemäße Magnetventil 100 ist exemplarisch mit Hilfe der Fig. 1a gezeigt. Grob besteht das erfindungsgemäße Magnetventil 100 aus dem Magnetantrieb 1 und dem auf der Unterseite (es kann anwendungstechnisch aber auch auf der Oberseite sein) angeordneten Ventilgehäuse 2, welches die verschiedenen Medienanschlüsse aufnimmt, die in die Durchlassöffnungen 20, 21, 22 münden.

In jeder bei diesen Ausführungsbeispielen gezeigten Varianten dient die linke Durchlassöffnung 20 als Anschluss der Druckleitung, die mittig angeordnete Durchlassöffnung 21 ist mit dem Arbeitsanschluss verbunden, die auf der rechten Seite angeordnete Durchlassöffnung 22 dient als Verbindung zur Entlüftungsleitung. Die der Druckleitung zugeordnete Durchlassöffnung 20 auf der linken Seite und die der Entlüftungsleitung zugeordnete, auf der rechten Seite angeordnete Durchlassöffnung 22 werden entsprechend der Stellung des Klappankers 5 geöffnet beziehungsweise geschlossen.

Der an die mittig angeordnete Durchlassöffnung 21 angeschlossener Arbeitsanschluss ist bei dieser Variante nicht verschließbar.

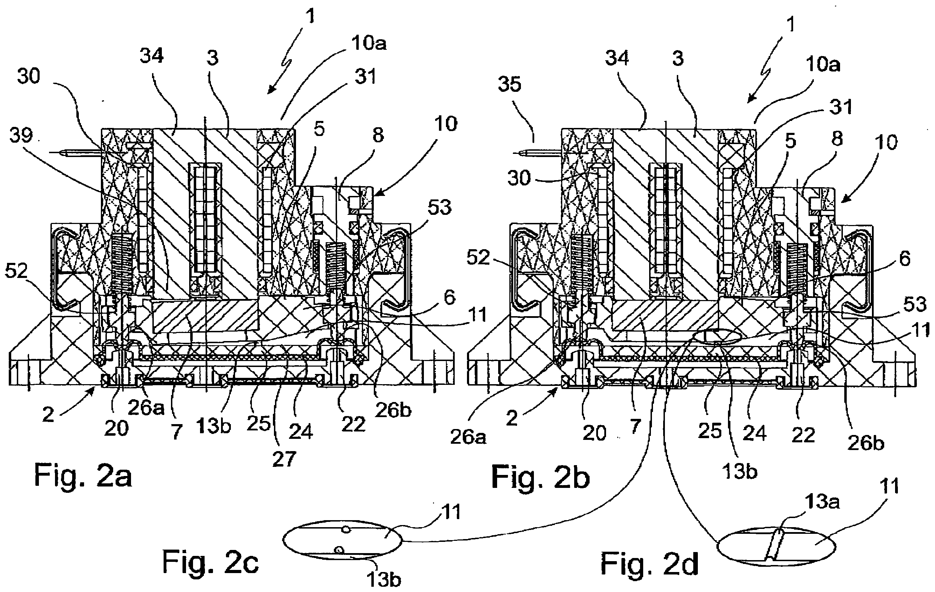

Es ist klar, dass die Ausgestaltung des Ventilteils des Magnetventils 100 sehr variabel und an verschiedene Begebenheiten anpassbar ist. Die Erfindung ist natürlich auf das hier gezeigte Ausführungsbeispiel nicht beschränkt. Der Magnetantrieb 1 besteht aus einem magnetisierbaren Körper 3 und einem zumindest teilweise magnetischen Klappanker 5. Der Klappanker 5 nimmt dabei in Abhängigkeit des Magnetisierungsgrades des magnetischen Körpers 3 an diesem mehrere Stellungen ein, in dem hier gezeigten Ausführungsbeispiel nimmt der Klappanker 5 zwei verschiedene Stellungen ein, die in Fig. 1a, 2a einerseits beziehungsweise Fig. 1b, 2b andererseits gezeigt sind.

Der Klappanker 5 wird gemäß der Erfindung von einem Ankerträger 6 gebildet, der ein magnetisches Ankerteil 7 trägt. Dieses magnetische Ankerteil 7 wirkt mit dem magnetisierbaren Körper 3 zusammen.

Der gesamte Magnetantrieb 1 ist in einem Antriebsgehäuse 10 angeordnet, der obere Gehäuseteil 10a des Antriebsgehäuses 10 ist mit dem Ventilgehäuse 2 durch seitliche Verbindungsklammern 12 fest verbunden.

In dem hier gezeigten Ausführungsbeispiel besteht der magnetische Körper 3 aus einem U-förmigen Joch 34. Das Joch 34 besteht dabei aus zwei parallel verlaufenden Schenkeln 36a, b, die durch den rechtwinklig anschließenden Steg 37 verbunden sind. Das U-förmige Joch 34 ist dabei nach unten, in Richtung des darunter angeordneten Klappankers 5 geöffnet angeordnet. Das Joch 34 besteht aus einem magnetisierbaren Material und dient zu Bündelung und Führung der Magnetfeldlinien.

Das Magnetfeld, in dem hier gezeigten Ausführungsbeispiel, wird durch zwei parallel nebeneinander angeordnete, Wicklungen 32, 33 tragende Spulen beziehungsweise Spulenkörper 30, 31 erzeugt, wenn nämlich die Wicklungen 32, 33 mit elektrischem Strom, zum Beispiel über die Anschlußkontakte 35, beaufschlagt beziehungsweise durchflossen werden.

In Fig. 1a (und Fig. 2a) ist die unbestromte Stellung gezeigt. Das heißt, zwischen der dem Klappanker 5 zugewandten Begrenzungsfläche und dem Klappanker 5 besteht ein Luftspalt 39. Der Klappanker 5 ist erfindungsgemäß mehrteilig ausgebildet. Er besteht aus einem Ankerträger 6 und einem vom Ankerträger 6 gehaltenen Ankerteil 7. Bevorzugterweise ist der Ankerträger 6 aus unmagnetischem oder schwachmagnetischem Material geschaffen, um die übrigen magnetischen Eigenschaften des Magnetantriebes nicht zu beeinträchtigen. Der Ankerträger 6 ist balkenförmig längserstreckend realisiert und erstreckt sich über die Breite des Jochs 34. In etwa mittig angeordnet trägt der Ankerträger 6 den magnetischen Ankerteil 7, wobei die Länge des Ankerteiles 7 hier im Wesentlichen der Breite des magnetischen Körpers 3, insbesondere des Joches 34 entspricht. Allgemein ist erfindungsgemäß vorgesehen, dass die Breite des Ankerteiles 7 zu circa 75 % bis 150 % der Breite des magnetischen Körpers 3, insbesondere des Joches 34, entspricht. Bevorzugt wurde dabei ein Intervall für die Breite des Ankerteiles 7 von circa 80 % bis zu 120 % der Breite des magnetischen Körpers 3 gefunden.

Das Ankerteil 7 wird von dem Ankerträger 6 gehalten. Hierzu ist der Ankerträger 6 deutlich länger ausgebildet als die Breite des Ankerteiles 7. In dem in Fig. 1a gezeigten Ausführungsbeispiel beträgt die Breite des Ankerteiles 7 circa 40 % der Länge des Ankerträgers 6. Als günstig hat sich hierbei erfindungsgemäß erwiesen, die Breite des Ankerteiles 7 zwischen 20 % und 55 % der Länge des Ankerträgers 6 zu wählen, bevorzugt zwischen 30 % und 50 %. Hier wurde ein gutes Verhältnis zwischen der zur Verfügung stehenden magnetischen Anziehungskraft und den zur Verfügung stehenden mechanischen Hebeln gefunden.

Die Höhe des Ankerträgers 6 beträgt circa 18 % seiner Länge und ist erfindungsgemäß in einem Intervall von 10 % bis 35 %, bevorzugt von 12 % bis 25 %, vorgesehen.

Der Klappanker 5 ist eines der beweglichen Elemente des Magnetantriebes 1. Daher ist die Lagerung des Klappankers 5 so gewählt, dass dieser eine Verschwenkbewegung ausführen kann. Der Verschwenkweg ist verhältnismäßig gering und beträgt nur wenige Grad, dabei wird der Luftspalt 39 geschlossen (vgl. Fig. 1b). Der Klappanker wird dabei dann bewegt, wenn die Wicklungen 32, 33 auf den Spulenkörpern 30, 31 mit elektrischem Strom beaufschlagt werden und das sich ausbildende Magnetfeld den magnetischen Ankerteil 7 des Klappankers 5 anzieht. Der Klappanker 5 klappt oder schwenkt dabei um die Klappachse 50. Diese steht in dem hier gezeigten Ausführungsbeispiel senkrecht auf der Zeichnungsebene und rechtwinklig zur Längserstreckung des Ankerträgers 6. Dabei befindet sich die Klappachse 50 auf der Oberseite des Klappankers 5, dem magnetisierbaren Körper 3 zugewandt. Als Unterteil 7 ist zum Beispiel ein Permanentmagnet 70 vorgesehen.

Der Ankerträger 6 ist in dem hier gezeigten Ausführungsbeispiel balkenartig realisiert und besitzt zur Gewichtsreduktion im Bereich des Ankerteiles 7 eine Aussparung 60. Dabei ist die Aussparung 60 auf der dem magnetisierbaren Körper 3 abgewandten Seite vorgesehen. Der Klappanker 5 ist wippenartig realisiert, wobei die beiden Wippenarme, die sich links und rechts von der Klappachse 50 erstecken, unterschiedlich lang sind.

Die Klappachse 50 befindet sich in dem hier gezeigten Ausführungsbeispiel am rechten Ende des magnetisierbaren Körpers 3 und somit auch am rechten Ende des Ankerteiles 7.

Der magnetisierbare Körper 3 ist dabei umgeben von dem Material des Antriebsgehäuses 10, zum Beispiel einer Vergussmasse. Jedoch ist die Anordnung so gewählt, dass die vordere Begrenzungsfläche 38 des Joches 34 gegenüber der Begrenzungsfläche 16, an welche der Klappanker 5 anliegt, vorsteht.

In dem hier gezeigten Ausführungsbeispiel ist der sich von der Klappachse 50 nach links erstreckende Wippenarm des Klappankers 5 etwas länger als der rechte Wippenarm. Die Asymmetrie beträgt von circa 62 % bis zu 38 % und liegt erfindungsgemäß in einem Intervall von 75 % bis zu 55 % bis zu 25 % bis 45 %. Natürlich ist es auch möglich, dass beide Wippenarme annähernd gleichlang oder tatsächlich gleichlang sind.

Durch die unterschiedlichen Wippenarmlänge wird durch die Erfindung das Hebelgesetz eingesetzt, was inbesondere in der unbestromten Stellung den sicheren Verschluss des Druckanschlusses an der Durchlassöffnung 20 erleichtert. In Fig. 1a ist die abgefallene Stellung des Magnetantriebes 1 gezeigt und die Durchlassöffnung 20 wird von dem nippelartigen Stößel 52 verschlossen.

In dem hier gezeigten Anwendungsfall eines Magnetventils 100 trägt der (bewegliche) Klappanker 5 einen oder mehrere, insbesondere auch als Nippel dienende, Stößel 52, 53. Die Stößel 52, 53 sind im länglichen Endbereich des Klappankers 5 auf oder in dem Ankerträger 6 angeordnet. Hierfür besitzt der Ankerträger 6 eine Aufnahme, in welcher der Stößel 52, 53 eingesetzt ist, wobei der Stößel 52, 53 eine gewisse Beweglichkeit oder Spiel, bevorzugt rechtwinklig zur Längserstreckung des Ankerträgers 6 beziehungsweise Klappankers 5, besitzt.

Bevorzugt ist in dem in Fig. 1a, 1b gezeigten Anwendungsfall der Stößel 52, 53 mit einer abdichtenden Eigenschaft ausgestattet, wirkt also als Nippel und besteht zum Beispiel aus Elastomeren oder anderen abdichtenden Materialien.

Für ein sicheres Verschließen der jeweiligen Durchlassöffnungen 20, 22 durch die den Durchlassöffnungen zugeordneten Stößel 52, 53, sind für die Stößel 52, 53 je eine Stößelfeder 54a, b angeordnet.

Die am linken Stößel 52 ansetzende Stößelfeder 54b befindet sich dabei in einer Sacklochbohrung 15 des Antriebsgehäuses 10 und stützt sich am Boden dieser Sacklochbohrung 15 ab.

Die am rechten Stößel 53 angreifende Stößelfeder 54a ist in einer Nothandbedienung 8 gelagert und stützt sich dort ab. Die Nothandbedienung 8 ist zum Beispiel als bewegliche Bolzenanordnung ausgeführt und besitzt an ihren dem Klappanker 5 zugewandten Enden ebenfalls eine Sacklochbohrung 80. Für den Fall, dass der magnetisierbare Körper 3 ausfällt, zum Beispiel keine Bestromung der Wicklungen möglich ist, ist es durch die Nothandbedienung 8 möglich, direkt auf den Stößel 53 einzuwirken und diesen an der Durchgangsöffnung aufzudrücken, was ein Umschalten des Ventils aus der Stellung nach Fig. 1a in die Stellung nach Fig. 1b (analog Fig. 2a zu Fig. 2b) ermöglicht. Dabei wirkt die Nothandbedienung 8 unmittelbar auf den Stößel 53, komprimiert dabei die Stößelfeder 54a und betätigt auch den Klappanker 5 sowie den gegenüberliegenden Stößel 52.

Aufgrund der wippenden oder Klappbewegung des Klappankers 5 in dem Magnetantrieb 1 ist der Ankertäger 6 beziehungsweise der Klappanker 5 nicht prismatisch ausgebildet, sondern besitzt entsprechende Abschrägungen.

So ist der Klappanker 5 beziehungsweise der Ankerträger 6 im rechten Bereich bezogen auf die Klappachse 50 sich konisch oder keilförmig verjüngend ausgebildet.

Links von der Klappachse 50 ist der Ankerträger 6 mit im wesentlichen parallel verlaufenden Begrenzungsflächen 61, 62 ausgestattet, um sich endseitig zu verjüngen und dort den (linken) Stößel 52 aufzunehmen.

Dabei ist die Begrenzungsfläche 61 an dem Ankerträger 6 auf der dem magnetisierbaren Körper 3 zugewandten Seite angeordnet, die Begrenzungsfläche 62 ist auf der vom magnetisierbaren Körper 3 abgewandten Seite angeordnet.

Die dem Körper 3 zugewandte Begrenzungsfläche 61 des Ankerträgers 6 ist dabei aus mindestens zwei, insbesondere an einer Wippkante stumpf aneinanderstoßenden Teilflächen 61a, b gebildet. Die dem Körper 3 abgewandte Begrenzungsfläche 62 ist aus zwei an einer Wippkante stumpf aneinanderstoßenden Teilflächen 62a, b gebildet. Aufgrund des Rückstandes der Begrenzungsfläche 16 des Antriebsgehäuses 10 gegenüber der Begrenzungsfläche 38 an dem magnetisierbaren Körper 3, ist im Bereich der Klappachse 50, an welcher sich natürlich auch eine Klappkante ausbildet, auf der dem magnetisierbaren Körper 3 zugewandten Begrenzungsfläche 61 ein kleiner Absatz zwischen den beiden Teilflächen 61a, b angeordnet. Durch diesen Absatz erfährt der Klappanker 5 beziehungsweise der Ankerträger 6 bereits eine gewisse Lagerung und Positionierung in dem Antriebsgehäuse 10.

Das Antriebsgehäuse 10 besitzt ein Deckelteil 11 unter welchem der Klappanker 5 vorgesehen ist. Der Deckelteil 11 besitzt dabei im Bereich der Wippkante 63, die auf der dem magnetisierbaren Körper 3 abgewandten Begrenzungsfläche 62 angeordnet ist, einen oder mehrere Abstütznoppen 13a oder -rippen 13b für eine Lagerung des Klappankers 5. Die Ausführungsform mit Abstütznoppen 13a ist in Fig. 2c, die Ausführungsform mit einer Abstützrippe 13b in Fig. 2d ausschnittsweise dargestellt. Fig. 2a und 2b zeigen eine Ausführungsform mit Abstützrippen 13b während die Anordnung von Abstütznoppen 13a in Fig. 1a und 1b gezeigt ist. Die Ausgestaltung ist dabei so gewählt, dass natürlich eine Klapp- beziehungsweise Schwenkbewegung des Klappankers 5 um seine Klappachse 50 möglich bleibt, das heißt, ein Abschnitt der Begrenzungsfläche 62 gleitet gegebenenfalls auf den Abstütznoppen 13a beziehungsweise Abstützrippen 13b. Die Anordnung ist dabei so gewählt, dass der Klappanker 5 zuverlässig in Position verbleibt, es besteht also ein gewisses Spiel oder eine entsprechende Passung zwischen dem Abstütznoppen 13a beziehungsweise Abstützrippen 13b und der Begrenzungsfläche 62.

Die Anordnung von Abstütznoppen 13a beziehungsweise Abstützrippen 13b bleibt nicht an die gezeigten Ausführungsformen jeweils beschränkt, sondern kann wahlweise zwischen bzw. mit den möglichen Ausführungen ausgetauscht beziehungsweise verwendet werden.

Wie bereits ausgeführt, ist das Deckelteil 11 in dem Anwendungsfall eines Magnetventiles 100 auch gleichzeitig das Ventilgehäusedeckelteil 23, welches den Ventilraum 24 begrenzt.

Dabei ist der Ventilraum 24 je nach Stellung der Nippel beziehungsweise Stößel 52, 53 relativ zu den jeweiligen Durchlassöffnungen 20, 22 mit den jeweiligen Anschlussleitungen verbunden. In der in Fig. 1a, 1b gezeigten Variante wird auch der Klappanker 5 von dem zu steuernden Medium umströmt, da der Klappanker 5 im Ventilraum 24 angeordnet ist.

Für den Fall, dass aggressive Medien mit dem erfindungsgemäßen Magnetventil zu steuern oder zu regeln sind, kann es günstig sein, zwischen dem Ventilraum 24 und dem Klappanker 5 eine Membran 25 anzuordnen. In diesem Fall sind die Abstütznoppen 13a beziehungsweise ist die Abstützrippe 13b auf einem Membranträger 27 angeordnet. Die Abstütznoppen 13a beziehungsweise die Abstützrippen 13b sind dem Klappanker 5 zugewandt und auf der den Abstütznoppen 13a beziehungsweise Abstützrippen 13b abgewandten Seite ist die Membran 25 vorgesehen. Der Membranträger 27 stellt eine zusätzliche Abgrenzungswand zwischen dem Ventilraum 24 und dem Klappanker 5 dar.

Im Bereich der zu verschließenden beziehungsweise zu öffnenden Durchlassöffnungen 20, 22 besitzt die Membran 25 hutartige Membranteile 26a, b, die mit den Stößeln 52, 53 zusammenwirken. Dabei werden die Durchlassöffnungen 20, 22 von den hutartigen Membranteilen 26a, b übergriffen, wobei diese den Stößeln 52, 53 zugewandt eine Ausnehmung für eine Fixierung des Membranteiles 26a, b an dem jeweiligen Stößel 52, 53 aufweist. Dabei ist bevorzugt eine zumindest kraftschlüssige Verbindung zwischen dem Stößel 52, 53 und dem Membranteil 26a, b vorgesehen um die Steuerungsbewegung des Klappankers 5 zuverlässig auf den die Abdichtung herstellenden Membranteil 26a, b zu übertragen.

Sowohl in Fig. 1a, 1b einerseits so wie auch in Fig. 2a, 2b andererseits sind jeweils zwei verschiedene Schaltstellungen des Magnetventils 100 gezeigt. In der (abgefallenen) Stellung des Elektromagneten, insbesondere der nichtmagnetischen Stellung des magnetisierbaren Körpers 3, ist der Druckanschluss an der linken Durchlassöffnung 20 durch den Stößel 52 umittelbar (der Stößel ist nippelartig) oder mittelbar (der Stößel 52 wirkt auf das Membranteil 26a) verschlossen, siehe Fig. 1a und Fig. 2a.

Der mittig an der nichtverschlossenen Durchlassöffnung 21 angeschlossene Arbeitsanschluss wird über die am rechten Durchlassöffnung 22 angeschlossenen Entlüftungsleitung entlüftet, hierzu ist diese Durchlassöffnung vom Stößel 53 nicht verschlossen.

In der aktivierten Stellung (siehe Fig. 1b beziehungsweise Fig. 2b) klappt der Klappanker 5 um wenige Grad (1° bis 5°) um, der Luftspalt 39 zwischen dem Joch 34 und dem Klappanker 5 ist geschlossen. Die hieraus resultierende Bewegung in Uhrzeigerrichtung öffnet die linke Durchlassöffnung 20 (den Druckanschluss) und verschließt gleichzeitig die rechte Durchlassöffnung 22 (die Entlüftungsleitung). Der an der Druckleitung anliegende Arbeitsdruck steht am Arbeitsanschluss (der Durchlassöffnung 21) zur Verfügung.

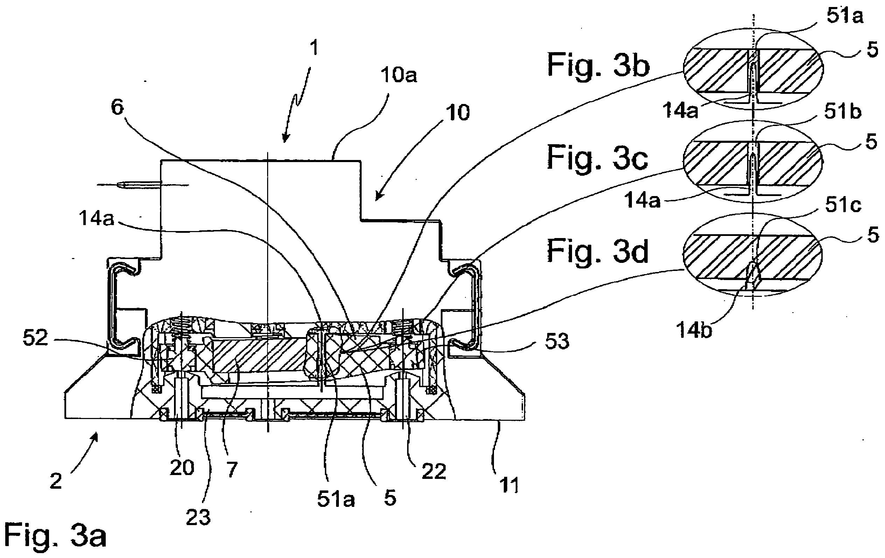

In Fig. 3 ist noch ein alternatives Lagerungskonzept des Klappankers 5 gezeigt, was hier zwar in der Variante ohne Membran gezeigt ist, aber auf die Variante mit Membran problemlos übertragbar ist. Anstelle von Abstütznoppen 13a oder Abstützrippen 13b ist hier in dem Klappanker 5, insbesondere im Ankerträger 6 eine Führungsnut 51 c vorgesehen, in welche ein an dem Deckelteil 11 rechtwinklig abstehender Führungsstift 14a einsteht und den Klappanker 5 beziehungsweise Ankerträger 6 führt. Dabei sind die Dicke des Führungsstiftes 14a und die Weite der Führungsnut 51 mit ausreichend Spiel gewählt, dass eine Beweglichkeit des Klappankers 5 um die Klappachse 50 möglich bleibt.

Neben der hier gezeigten Ausführungsform mit einem in die Führungsnut 51c einstehenden Führungsstift 14a besteht die Möglichkeit, im Klappanker 5 eine Durchdringungsöffnung 51b oder eine Ausnehmung 51c vorzusehen, in der der Führungsstift 14a, der auch als Führungssteg 14b ausgebildet sein kann (vgl. Fig. 3b und 3c) einsteht. Die möglichen wahlweise mit sämtlichen Ausführungsformen der Erfindung wechselseitig verwendbeziehungsweise kombinierbaren Ausführungsformen von Führungsstift 14a beziehungsweise Führungssteg 14b beziehungsweise der Ausnehmung 51 c, der Durchdringungsöffnung 51b beziehungsweise der Führungsnut 51a sind in den Detailzeichnungen der Fig. 3b bis 3d wiedergegeben.

## Patentansprüche

1. Magnetantrieb (1), bestehend aus einem magnetisierbaren Körper (3) und einem, zumindest teilweise magnetischen Klappanker (5), wobei der Klappanker (5) am Körper (3) in Abhängigkeit des Magnetisierungsgrades des Körpers (3) mindestens zwei verschiedene Stellungen einzunehmen vermag, wozu der Klappanker (5) über eine Klappachse (50) klappt und der Klappanker (5) von einem balkenförmigen Ankerträger (6) gebildet ist, der ein magnetisches Anker teil (7) trägt, welches mit dem magnetisierbaren Körper (3) zusammenwirkt, wobei der Klappanker in je einem Endbereich wenigstens einen Stößel (52, 53) oder Nippel zur wechselweisen Freigabe oder zum wechselseitigen Verschluss von Durchgangsöffnungen eines Ventils trägt und jedem Stößel (52, 53) wenigstens eine Stößelfeder zugeordnet ist, **dadurch gekennzeichnet, dass** eine dem Körper (3) zugewandte und/oder von dieser abgewandte Begrenzungsfläche (61, 62) des Ankerträgers (6) aus zwei an einer Wippkante (63) stumpf aneinanderstoßenden Teilflächen (61a, 61b, 62a, 62b) gebildet ist.

2. Magnetantrieb nach Anspruch 1, **dadurch gekennzeichnet, dass** der Ankerträger (6) aus einem anderen Material besteht als das magnetische Ankerteil (7).

3. Magnetantrieb nach Anspruch 1 oder 2, **dadurch gekennzeichnet, dass** der Ankerträger (6) aus einem Leichtwerkstoff, Metall, Leichtmetall, Aluminium oder (faserverstärkten) Kunststoff besteht.

4. Magnetantrieb nach einem der vorhergehenden Ansprüche, **dadurch gekennzeichnet, dass** das magnetische Ankerteil (7) als Permanentmagnet (70) ausgebildet ist.

5. Magnetantrieb nach einem der vorhergehenden Ansprüche, **dadurch gekennzeichnet, dass** die Breite des Ankerteiles (7) circa 75 % bis 150 % der Breite des Körpers (3), bevorzugt circa 80% bis 120 % der Breite des Körpers (3) beträgt.

6. Magnetantrieb nach einem der vorhergehenden Ansprüche, **dadurch gekennzeichnet, dass** die Breite des Ankerteiles (7) zwischen 20 % und 55 % der Länge des Ankerträgers (6), bevorzugt zwischen 30 % und 50 % der Länge des Ankerträgers (6) beträgt.

7. Magnetantrieb nach einem der vorhergehenden Ansprüche , **dadurch gekennzeichnet, dass** der Klappanker (5) in einem, gegebenenfalls auch den magnetisierbaren Körper (3) umgebenden, Antriebsgehäuse (10) beweglich gelagert ist und das Antriebsgehäuse (10) auf der dem Körper (3) abgewandten Seite ein Deckelteil (11) aufweist.

8. Magnetantrieb nach Anspruch 7, **dadurch gekennzeichnet, dass** auf dem Deckelteil (11) ein oder mehrere Abstütznoppen (13b) oder Abstützrippen (13a) für den Klappanker (5) vorgesehen sind.

9. Magnetantrieb nach einem der vorhergehenden Ansprüche, **dadurch gekennzeichnet, dass** der Klappanker (5) mindestens eine Ausnehmung (51c), eine Durchdringungsöffnung (51b) oder eine Führungsnut (51a) aufweist und an dem Deckelteil (11) und/oder dem insbesondere den magnetisierten Körper (3) aufnehmenden Gehäuseteil (10a) ein in die Ausnehmung (51c), Durchdringungsöffnung (51b) oder Führungsnut (51a) einstehender Führungsstift (14a) oder Führungssteg (14b) vorgesehen ist.

10. Magnetantrieb nach einem der vorhergehenden Ansprüche, **dadurch gekennzeichnet, dass** der magnetisierbare Körper (3) gebildet ist von einer Spule (30,31), welche Wicklungen (32,33) aus von elektrischem Strom durchfließbarem Draht trägt oder dadurch, dass der magnetisierbare Körper (3) gebildet ist von einem bewegbaren Permanentmagnet.

11. Magnetventil bestehend aus einem Magnetantrieb nach einem oder mehreren der vorhergehenden Ansprüche und einem Ventilgehäuse (2), welches zumindest eine zu öffnende beziehungsweise zu verschließende Durchlassöffnung (20, 22) aufweist und der Klappanker (5) zumindest einen Stößel (52,53) trägt, der mit der Durchlassöffnung (20,22) zusammenwirkt.

12. Magnetventil nach Anspruch 11, **dadurch gekennzeichnet, dass** das dem Klappanker (5) zugewandte Gehäuseteil (23) des Ventilgehäuses (2) als Deckelteil (11) des Antriebsgehäuses (10) dient.

13. Magnetventil nach Anspruch 11 oder 12, **dadurch gekennzeichnet, dass** der Klappanker (5) im von Medium durchströmten Ventilraum (24) angeordnet ist oder durch eine Membran (25) von dem Ventilraum (24) abgegrenzt ist und der Stößel (52,53) über ein Membranteil (26a,26b) auf die Durchlassöffnung (20,22) wirkt.

## Claims

1. A magnetic actuator (1), consisting of a magnetizable body (3) and an at least partly magnetic hinged armature (5), wherein the hinged armature (5) is able to take at least two different positions at the body (3) depending on the degree of magnetization of the body (3), whereto the hinged armature (5) folds over a hinged axis (50), and the hinged armature (5) is formed by a beam-shaped armature holder (6) carrying a magnetic armature part (7) that interacts with the magnetizable body (3), wherein the hinged armature carries in each of an end area at least one tappet (52, 53) or nipple for mutual release or mutual locking of outlet openings of a valve, and at least one tappet spring is allocated each tappet (52, 53), **characterized in that** a delimiting surface (61, 62) facing and /or opposite the body (3) of the armature holder (6) is formed by two part surfaces (61a, 61b, 62a, 62b) abutting bluntly at a seesaw edge (63).

2. The magnetic actuator according to claim 1, **characterized in that** the armature holder (6) consists of material different from the one of the magnetic armature part (7).

3. The magnetic actuator according to either claim 1 or 2, **characterized in that** the armature holder (6) consists of lightweight material, metal, light metal, aluminum, or (fiber reinforced) plastic.

4. The magnetic actuator according to one of the preceding claims, **characterized in that** the magnetic armature part (7) is formed as permanent magnet (70).

5. The magnetic actuator according to one of the preceding claims, **characterized in that** the width of the armature part (7) is roughly 75 % to 150 % of the width of the body (3), preferably roughly 80 % to 120 % of the width of the body (3).

6. The magnetic actuator according to one of the preceding claims, **characterized in that** the width of the armature part (7) is between 20 % and 55 % of the length of the armature holder (6), preferably between 30 % and 50 % of the length of the armature holder (6).

7. The magnetic actuator according to one of the preceding claims, **characterized in that** the hinged armature (5) is mounted movably in an actuator housing (10) that surrounds, if necessary, also the magnetizable body (3), and the actuator housing (10) has a lid part (11) on the side opposite the body (3).

8. The magnetic actuator according to claim 7, **characterized in that** on the lid part (11) one or more support nubs (13b) or support ribs (13a) are provided for the hinged armature (5).

9. The magnetic actuator according to one of the preceding claims, **characterized in that** the hinged armature (5) has at least a recess (51c), an outlet opening (51b), or a guide groove (51a), and at the lid part (11) and/or the housing part (10a) receiving in particular the magnetizable body (3) a guide pin (14a) or guide bridge (14b) is provided that projects in the recess (51c), outlet opening (51b), or guide groove (51a).

10. The magnetic actuator according to one of the preceding claims, **characterized in that** the magnetizable body (3) is formed by a coil (30, 31) carrying windings (32, 33) of wire that can be electrified, or **in that** the magnetizable body (3) is formed by a movable permanent magnet.

11. A magnetic valve consisting of a magnetic actuator according to one or more of the preceding claims, and a valve housing (2) that has at least one outlet opening (20, 22) that can be opened or closed, and the hinged armature (5) carries at least one tappet (52, 53) interacting with the outlet opening (20, 22).

12. The magnetic valve according to claim 11, **characterized in that** the housing part (23) of the valve housing (2) facing the hinged armature (5) serves as lid part (11) of the actuator housing (10).

13. The magnetic valve according to either claim 11 or 12, **characterized in that** the hinged armature (5) is arranged in the valve chamber (24) that is flown through by medium, or is separated by a membrane (25) from the valve chamber (24), and the tappet (52, 53) acts via a membrane part (26a, 26b) of the outlet opening (20, 22).

## Revendications

1. Actionneur magnétique (1) consistant en un corps magnétisable (3) et un induit articulé (5) au moins partiellement magnétique configuré de façon à ce que l'induit articulé (5) peut prendre deux positions distinctes en fonction du niveau de magnétisation du corps (3) à l'aide d'un axe de pivotement (50) permettant à l'induit articulé (5) de pivoter autour de cet axe et à l'aide de la réalisation de l'induit articulé (5) par un support d'induit (6) en forme de barre portant une pièce d'induit magnétique (7) interagissant avec le corps magnétisable (3), et avec l'induit articulé (5) comportant à chaque extrémité au moins un poussoir (52, 53) ou une languette destinée à ouvrir ou fermer en alternance des ouvertures de passage d'une vanne dont chaque poussoir (52, 53) comporte au moins un ressort de poussoir correspondant, **caractérisé en ce qu'**une surface de délimitation (61, 62) faisant face au corps (3) ou opposée du support d'induit (6) est formée par contact latéral de deux faces partielles (61a, 61b, 62a, 62b).

2. Actionneur magnétique selon la revendication 1, **caractérisé en ce que** le support d'induit (6) consiste en un matériau différent de celui de la pièce d'induit magnétique (7).

3. Actionneur magnétique selon la revendication 1 ou 2, **caractérisé en ce que** le support d'induit (6) consiste en un matériau de construction léger, en métal, en métal léger, en aluminium ou en un plastique (renforcé de fibres).

4. Actionneur magnétique selon une des revendications précédentes, **caractérisé en ce que** la pièce d'induit magnétique (7) est un aimant permanant (70).

5. Actionneur magnétique selon une des revendications précédentes, **caractérisé en ce que** la largeur de la pièce d'induit (7) correspond à environ 75% à 150% de la largeur du corps (3) et de préférence environ 80% à 120% de la largeur du corps (3).

6. Actionneur magnétique selon une des revendications précédentes, **caractérisé en ce que** la largeur de la pièce d'induit (7) est située entre 20% et 55% de la longueur du support d'induit (6) et de préférence entre 30% et 50% de la longueur du support d'induit (6).

7. Actionneur magnétique selon une des revendications précédentes, **caractérisé en ce que** l'induit articulé (5) est maintenu de façon mobile à l'intérieur d'un boitier d'actionneur (10) le cas échéant magnétisable et **en ce que** le boitier d'actionneur (10) possède un couvercle (11) au niveau de la face opposée du corps (3).

8. Actionneur magnétique selon la revendication 7, **caractérisé en ce qu'un** ou plusieurs picots de support (13b) ou des nervures de support (13a) pour l'induit articulé (5) est/sont prévu(s) au niveau du couvercle (11).

9. Actionneur magnétique selon une des revendications précédentes, **caractérisé en ce que** l'induit articulé (5) comporte au moins un évidement (51c), une ouverture de passage (51b) ou une gorge de guidage (51a) et **en ce qu'**une tige de guidage (14a) ou une traverse de guidage (14b) s'étendant dans l'évidement (51c), l'ouverture de passage (51b) ou la gorge de guidage (51a) est prévue au niveau du couvercle (11) et/ou du boitier d'actionneur (10a) prévu pour recevoir en particulier le corps (3) magnétisé.

10. Actionneur magnétique selon une des revendications précédentes, **caractérisé en ce que** le corps magnétisable (3) est formé par une bobine (30, 31) portant un enroulement (32, 33) de fils parcouru par un courant électrique ou **en ce que** le corps magnétisable (3) est formé par un aimant permanent.

11. Electrovanne consistant en un actionneur magnétique selon une ou plusieurs des revendications précédentes et en un boitier de vanne (2) comportant au moins une ouverture de passage (20, 22) à ouvrir ou fermer et configuré avec un induit pivotable (5) comportant au moins un poussoir (52, 53) interagissant avec l'ouverture de passage (20, 22).

12. Electrovanne selon la revendication 11, **caractérisée en ce que** la partie du boitier (23) du boitier de vanne (2) faisant face à l'induit pivotable (5) sert comme couvercle (11) du boitier d'actionneur (10).

13. Electrovanne selon la revendication 11 ou 12, **caractérisée en ce que** l'induit pivotable (5) est situé à l'intérieur de la chambre de l'électrovanne (24) parcourue par le flux ou **en ce qu'**il est séparé de la chambre de l'électrovanne (24) par une membrane (25) avec le poussoir (52, 53) agissant via un élément de membrane (26a, 26b) sur l'ouverture de passage (20, 21).
